# DEMANDE DE BREVET EUROPEEN

(11) **EP 1 637 319 A1**
(43) Date de publication de la demande: **22.03.2006**
(21) Numéro de dépôt: 05291880.2
(22) Date de dépôt: 13.09.2005
(51) Int. Cl.: B32B 27/08, B32B 7/12, F16L 11/04

(54) **Structures de barrieres**

(30) Priorité: 15.09.2004 FR 0409755
(71) Demandeur: Arkema, 92800 Puteaux (FR)
(72) Inventeur: Bonnet, Anthony, 27170 Beaumont le Roger (FR); Chopinez, Fabrice, 27000 Evreux (FR); Bellet, Gaelle, 27000 Evreux (FR); Silagy, David, 27000 Evreux (FR)

(57) **Abrégé**

La présente invention concerne une structure comprenant successivement :
une couche de polymère barrière,
une couche de liant comprenant, le total étant 100% :
   1 à 80% d'au moins un polyéthylène portant des fonctions époxy,
   99 à 20% d'au moins un polymère visqueux compatible avec le polyéthylène portant des fonctions époxy,
une couche de polyéthylène,
et éventuellement une autre couche de liant et une couche de polymère barrière, les couches adhérant dans leur zone de contact respective.

Selon une variante de l'invention si le polymère visqueux compatible avec le polyéthylène portant des fonctions époxy est un polyéthylène et si le mélange de ce polyéthylène visqueux compatible avec le polyéthylène portant des fonctions époxy possède une tenue mécanique suffisante pour pouvoir être coextrudé avec le polymère barrière alors on peut supprimer la couche de polyéthylène qui est adjacente à la couche de liant.

Cette structure est utile pour faire des dispositifs de stockage ou de transfert de fluides en particulier dans les automobiles. L'invention concerne aussi ces dispositifs. Ces dispositifs peuvent être des tuyaux, des réservoirs, des bouteilles et des conteneurs dans lesquels la couche de polymère barrière est au contact du fluide stocké ou transporté. Ces structures peuvent comprendre d'autres couches constituées d'autres matériaux.

## Description

### [Domaine de l'invention]

La présente invention concerne une structure comprenant au moins une couche de polyéthylène et au moins une couche de polymère barrière. Ces structures sont utiles par exemple pour fabriquer des tuyaux, des réservoirs, des bouteilles et des conteneurs dans lesquels la couche de polymère barrière est au contact du fluide stocké ou transporté. Les objets précédents peuvent être fabriqués par les techniques habituelles de la transformation des matières thermoplastiques telles que la coextrusion et la coextrusion soufflage. "barrière" veut dire par exemple que cette couche ne laisse pas, ou très peu, passer l'essence qu'on utilise dans les automobiles.

### [L'art antérieur et le problème technique]

Le polyéthylène possède des propriétés barrière vis-à-vis de l'essence mais qui sont insuffisantes pour de nombreux usages. Il est nécessaire que la structure comprenne aussi une couche de polymère barrière, cependant la plupart des polymères barrière sont incompatibles avec le polyéthylène. Ainsi il est nécessaire de disposer une couche de liant entre la couche de polyéthylène et la couche de polymère barrière. Les polyéthylènes qui portent des fonctions époxy telles que par exemple le (méth)acrylate de glycidyle sont des liants possibles entre du polyéthylène et un matériau barrière tel que le PPS ou un polyester. "PPS", abréviation de "poly(phénylène sulfide)" désigne le poly(sulfure de phenylène). Cependant il est parfois difficile de coextruder ces matériaux et la force de pelage est parfois trop faible. On a maintenant trouvé qu'un mélange d'un polyéthylène portant des fonctions époxy avec un polymère visqueux qui est compatible avec lui était un très bon liant.

### [Brève description de l'invention]

La présente invention concerne une structure comprenant successivement :
une couche de polymère barrière,
une couche de liant comprenant, le total étant 100% :
   - 1 à 80% d'au moins un polyéthylène portant des fonctions époxy,
   - 99 à 20% d'au moins un polymère visqueux compatible avec le polyéthylène portant des fonctions époxy,
une couche de polyéthylène,
les couches adhérant dans leur zone de contact respective.

Selon une variante, la présente invention concerne une structure comprenant successivement :
une couche de polymère barrière,
une couche de liant comprenant, le total étant 100% :
   - 1 à 80% d'au moins un polyéthylène portant des fonctions époxy,
   - 99 à 20% d'au moins un polymère visqueux compatible avec le polyéthylène portant des fonctions époxy,
une couche de polyéthylène,
une couche de liant comprenant, le total étant 100% :
   - 1 à 80% d'au moins un polyéthylène portant des fonctions époxy,
   - 99 à 20% d'au moins un polymère visqueux compatible avec le polyéthylène portant des fonctions époxy,
une couche de polymère barrière,
les couches adhérant dans leur zone de contact respective.

Selon une forme préférée, le polymère visqueux compatible avec le polyéthylène portant des fonctions époxy est un polyéthylène.

Selon une variante de l'invention, si le polymère visqueux compatible avec le polyéthylène portant des fonctions époxy est un polyéthylène et si le mélange de ce polyéthylène visqueux compatible avec le polyéthylène portant des fonctions époxy possède une tenue mécanique suffisante pour pouvoir être coextrudé avec le polymère barrière alors on peut supprimer la couche de polyéthylène qui est adjacente à la couche de liant.

C'est-à-dire que dans cette variante la structure comprend successivement : Soit :
une couche de polymère barrière,
une couche de liant comprenant, le total étant 100% :
   - 1 à 80% d'au moins un polyéthylène portant des fonctions époxy,
   - 99 à 20% d'au moins un polyéthylène visqueux compatible avec le polyéthylène portant des fonctions époxy,
les couches adhérant dans leur zone de contact respective.

soit :
une couche de polymère barrière,
une couche de liant comprenant, le total étant 100% :
   - 1 à 80% d'au moins un polyéthylène portant des fonctions époxy,
   - 99 à 20% d'au moins un polyéthylène visqueux compatible avec le polyéthylène portant des fonctions époxy,
une couche de polymère barrière,
les couches adhérant dans leur zone de contact respective.

Cette structure est utile pour faire des dispositifs de stockage ou de transfert de fluides en particulier dans les automobiles. L'invention concerne aussi ces dispositifs. Ces dispositifs peuvent être des tuyaux, des réservoirs, des bouteilles et des conteneurs dans lesquels la couche de polymère barrière est au contact du fluide stocké ou transporté. Ces structures peuvent comprendre d'autres couches constituées d'autres matériaux.

### [Description détaillée de l'invention]

**S'agissant du polymère barrière,** on peut citer à titre d'exemple le PVDF. On désigne ainsi les PVDF, homopolymères du fluorure de vinylidène (VDF) et les copolymères du fluorure de vinylidène (VDF) contenant de préférence au moins 50 % en poids de VDF et au moins un autre monomère copolymérisable avec le VDF. Avantageusement le comonomère est fluoré, il peut être choisi par exemple parmi le fluorure de vinyle; le trifluoroéthylène (VF3); le chlorotrifluoroethylène (CTFE); le 1,2-difluoroéthylène; le tetrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-dimethyl-1,3-dioxole) (PDD). De préférence, le comonomère éventuel est choisi parmi le chlorotrifluoroéthylène (CTFE), l'hexafluoropropylène (HFP), le trifluoroéthylène (VF3) et le tétrafluoroéthylène (TFE).

De préférence le PVDF contient, en poids, au moins 50% de VDF, plus préférentiellement au moins 75% et mieux encore au moins 85%. Le comonomère est avantageusement l'HFP.

On peut encore citer les polyesters tels que le PBT (polybutylène téréphtalate), le PEN (polyéthylène naphtalate) et le PBN (polybutylène naphtalate). On peut encore citer les polycétones, les polydimethylcétènes et le PPS. Les polydiméthylcétènes sont décrits dans les documents **EP 1388553, EP1002819** et **WO 04/044030.**

Le polymère barrière n'est pas un PVC ni un polypropylène.

Le polymère barrière peut être fonctionnalisé en tout ou partie. C'est-à-dire que la couche de polymère barrière comprend, le total étant 100%, de 1 à 100% de polymère barrière fonctionnalisé et de 99 à 0% de polymère barrière. Avantageusement la couche de polymère barrière comprend, le total étant 100%, de 1 à 40% de polymère barrière fonctionnalisé et de 99 à 60% de polymère barrière. De préférence, la couche de polymère barrière comprend, le total étant 100%, de 15 à 40% de polymère barrière fonctionnalisé et de 85 à 60% de polymère barrière.

Selon une autre forme de l'invention la couche de polymère barrière peut être constituée de deux couches, l'une comprenant un mélange, le total étant 100%, de 1 à 100% de polymère barrière fonctionnalisé et de 99 à 0% de polymère barrière, cette couche étant disposée contre la couche de liant,
l'autre constituée du polymère barrière.

Selon une forme avantageuse de l'invention la couche de polymère barrière est constituée de deux couches, l'une comprenant un mélange, le total étant 100%, de 1 à 40% de polymère barrière fonctionnalisé et de 99 à 60% de polymère barrière, cette couche étant disposée contre la couche de liant,
l'autre constituée du polymère barrière.

Selon une forme préférée de l'invention la couche de polymère barrière est constituée de deux couches, l'une comprenant un mélange, le total étant 100%, de 15 à 40% de polymère barrière fonctionnalisé et de 85 à 60% de polymère barrière, cette couche étant disposée contre la couche de liant,
l'autre constituée du polymère barrière.

On entend par polymère barrière fonctionnalisé un polymère barrière comprenant au moins une fonction polaire (telle que par exemple une fonction époxy, anhydride, acide, sel d'acide) rattachée aux chaînes du polymère barrière. A titre d'exemple de polymère barrière fonctionnalisé, on peut citer le PVDF greffé par un monomère insaturé ou bien un PVDF copolymère obtenu par la copolymérisation du VF2 et d'au moins un monomère insaturé (éventuellement en présence aussi d'un autre comonomère, il peut dont s'agir alors d'un terpolymère).

Le PVDF greffé peut être fabriqué selon un procédé de greffage dans lequel :
a) on mélange le polymère fluoré à l'état fondu avec le monomère insaturé,
b) le mélange obtenu en a) est mis sous forme de films, de plaques, de granulés ou de poudre,
c) les produits de l'étape b) sont soumis, en l'absence d'air, à une irradiation photonique (y) ou électronique (p) sous une dose comprise entre 1 et 15 Mrad,
d) le produit obtenu en c) est éventuellement traité pour éliminer tout ou partie du monomère insaturé qui n'a pas été greffé sur le polymère fluoré.

S'agissant du monomère insaturé de greffage, à titre d'exemples on peut citer les acides carboxyliques et leurs dérivés, notamment les anhydrides d'acide, les chlorures d'acides, les isocyanates, les oxazolines, les époxydes, les amines ou les hydroxydes. De préférence, le monomère insaturé ne présente qu'une seule liaison C=C, ce qui évite toute réticulation du PVDF (d'où une augmentation de la viscosité à l'état fondu et des difficultés potentielles d'extrusion).

Des exemples d'acides carboxyliques insaturés sont ceux ayant 2 à 20 atomes de carbone tels que les acides acrylique, méthacrylique, maléïque, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés. On peut encore citer l'acide undécylènique.

Des acides dicarboxyliques insaturés ayant 4 à 10 atomes de carbone et leurs dérivés fonctionnels, particulièrement leurs anhydrides, sont des monomères de greffage particulièrement préférés. L'anhydride maléïque est préféré car il a peu tendance à homopolymériser et permet d'obtenir une bonne adhésion. Le greffage de l'anhydride maléïque sur le PVDF est préféré car la copolymérisation du VF2 et de l'anhydride maléïque n'est pas facile avec les procédés industriels en milieu dispersé (émulsion ou suspension).

L'étape a) s'effectue dans tout dispositif de mélange tel que des extrudeuses ou des malaxeurs utilisés dans l'industrie des thermoplastiques.

S'agissant des proportions du polymère fluoré et du monomère insaturé la proportion de polymère fluoré est avantageusement, en poids, de 90 à 99,9% pour respectivement de 0,1 à 10% de monomère insaturé. De préférence la proportion de polymère fluoré est de 95 à 99,9% pour respectivement de 0,1 à 5% de monomère insaturé.

A l'issue de l'étape a) on constate que le mélange du polymère fluoré et du monomère insaturé a perdu environ de 10 à 50% du monomère insaturé qu'on avait introduit au début de l'étape a). Cette proportion dépend de la volatilité et de la nature du monomère insaturé. En fait le monomère a été dégazé dans l'extrudeuse ou le mélangeur et il est recupéré dans les circuits d'évents.

S'agissant de l'étape c) les produits récupérés à l'issue de l'étape b) sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 6 Mrad et de préférence entre 3 et 5 Mrad. De préférence, la source d'irradiation est une bombe au cobalt 60.

Le greffage a lieu à « froid », typiquement à des températures inférieures à 100°C, voire 50°C, le mélange du PVDF et du monomère insaturé n'est donc pas à l'état fondu comme pour un procédé de greffage classique en extrudeuse. Une différence essentielle est donc que, dans le cas d'un polymère semi-cristallin (comme avec le PVDF), le greffage a lieu dans la phase amrophe et non dans la phase cristalline alors qu'il se produit un greffage homogène dans le cas d'un greffage en extrudeuse à l'état fondu. Le monomère insaturé ne se répartit pas identiquement sur les chaînes du PVDF dans le cas du greffage par irradiation et dans le cas du greffage en extrudeuse.

S'agissant de l'étape d) on peut éliminer par tout moyen le monomère non greffé. La proportion de monomère greffé par rapport au monomère présent au début de l'étape c) est comprise entre 50 et 100%. On peut laver avec des solvants inertes vis à vis du polymère fluoré et des fonctions greffées. Par exemple quand on greffe de l'anhydride maléïque on peut laver au chlorobenzene. On peut aussi plus simplement dégazer en mettant sous vide le produit récupéré à l'étape c).

**S'agissant de la couche de liant et d'abord du polyéthylène portant des fonctions époxy,** il peut s'agir d'un polyéthylène sur lequel on a greffé des fonction époxy ou d'un copolymère de l'éthylène et d'un époxyde insaturé.

S'agissant des copolymères de l'éthylène et d'un époxyde insaturé, on peut citer par exemple les copolymères de l'éthylène d'un (méth)acrylate d'alkyle et d'un époxyde insaturé ou les copolymères de l'éthylène, d'un ester vinylique d'acide carboxylique saturé et d'un époxyde insaturé. Ces copolymères sont obtenus par un procédé de copolymérisation qui utilise des pressions élevées (P>1000 bar). La quantité d'époxyde peut être jusqu'à 15 % en poids du copolymère et la quantité d'éthylène d'au moins 50 % en poids. Avantageusement la proportion d'époxyde est comprise entre 2 et 12% en poids. Avantageusement la proportion de (méth)acrylate d'alkyle est comprise entre 0 et 40% en poids et de préférence entre 5 et 35% en poids.
Avantageusement c'est un copolymère de l'éthylène, d'un (méth)acrylate d'alkyle et d'un époxyde insaturé. De préférence, le (méth)acrylate d'alkyle est tel que l'alkyle possède 1 à 10 atomes de carbone.

Des exemples d'acrylate ou méthacrylate d'alkyle utilisables sont notamment le méthacrylate de méthyle, l'acrylate de méthyle, l'acrylate d'éthyle, l'acrylate de n-butyle, l'acrylate d'isobutyle, l'acrylate de 2-éthylhexyle. De préférence, il s'agit de l'acrylate d'éthyle, de butyle, de méthyle ou de 2-éthyl hexyle.

Le MFI (indice de fluidité à l'état fondu) peut être par exemple entre 0,1 et 50 g/10 min (mesuré à 190°C sous 2,16 kg).

Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-I-glycidyléther, le cyclohexène-4,5-diglycidyldicarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Le méthacrylate de glycidyle est préféré car il copolymérise très bien avec l'éthylène et présente une bonne réactivité chimique.

**S'agissant de la couche de liant et maintenant du polymère visqueux compatible avec le polyéthylène portant des fonctions époxy,** les copolymères blocs SBS hydrogénés tels que par exemple les SEBS, les EPR, les EPDM et le polyéthylène. Ce polyéthylène peut être du LDPE, LLDPE, HDPE et tout polyéthylène fabriqué par tout procédé que ce soit en phase gaz, en masse, en solution et que ce soit par catalyse Ziegler, par initiation radicalaire ou par catalyse métallocène (ou catalyse monosite). Avantageusement, le MFI (abréviation de Melt Flow Index ou indice de fluidité à l'état fondu) de ce polymère visqueux compatible est compris entre 0,1 et 1 g/10 min (mesuré à 190°C sous 2,16 kg) et de préférence entre 0,15 et 0,5. Avantageusement, c'est un PEHD.

Quant aux proportions des constituants de la couche de liant, elles sont :
1 à 80% du polyéthylène portant des fonctions époxy,
99 à 20% du polymère visqueux compatible avec le polyéthylène portant des fonctions époxy,
avantageusement :
10 à 50% du polyéthylène portant des fonctions époxy,
90 à 50% du polymère visqueux compatible avec le polyéthylène portant des fonctions époxy,
et de préférence :
10 à 40% du polyéthylène portant des fonctions époxy,
90 à 60% du polymère visqueux compatible avec le polyéthylène portant des fonctions époxy.

Avantageusement, le MFI du liant est compris entre 0,15 et 1 g/10 minutes (mesuré à 190°C sous 2,16 kg).

**S'agissant de la couche de polyéthylène,** ce polyéthylène peut être du LDPE, LLDPE, HDPE et tout polyéthylène fabriqué par tout procédé que ce soit en phase gaz, en masse, en solution et que ce soit par catalyse Ziegler, par initiation radicalaire ou par catalyse métallocène (ou catalyse monosite). Il s'agit de préférence d'un HDPE car le HDPE présente une bonne résistance à l'impact à des températures aussi basses que -50°C.

Les structures de l'invention peuvent comprendre d'autres couches.

L'épaisseur de la structure peut être quelconque, elle est par exemple comprise entre 100 µm et 25 mm.

**S'agissant de la variante** dans laquelle le polymère visqueux compatible avec le polyéthylène portant des fonctions époxy est un polyéthylène et dans laquelle le mélange de ce polyéthylène visqueux compatible avec le polyéthylène portant des fonctions époxy possède une tenue mécanique suffisante pour pouvoir être coextrudé avec le polymère barrière. On a vu qu'on peut supprimer la couche de polyéthylène qui est adjacente à la couche de liant. Dans cette variante sont valables tout ce qui a été décrit plus haut et en particulier la composition du liant, la composition de la (ou des) couches barrière, la nature des produits sauf bien entendu ce qui est spécifique de cette variante. En effet dans cette variante, le polymère visqueux compatible avec le polyéthylène portant des fonctions époxy est avantageusement du PEHD.

### [Exemples]

On a utilisé les polymères suivants :
**KYNAR® 720 :** PVDF homopolymère de la société ATOFINA et de MVI (Melt Volume Index ou indice de fluidité en volume à l'état fondu) 10 cm³/10 min (230°C , 5kg).
**PVDF-1 :** PVDF homopolymère (Kynar® 720) greffé par de l'anhydride maléïque, greffé à 9000 ppm, présentant un MVI (Melt Volume Index ou indice de fluidité en volume à l'état fondu) 7 cm³/10 min (230°C, 5 kg). Le greffage a été réalisé à l'aide d'une irradiation à la bombe au colbalt 60 d'un mélange de Kynar 720 et d'anhydride maléïque obtenu à l'aide d'une extrudeuse bi-vis fonctionnant à 230°C et 150 tours/minute à un débit de 10 kg/h. L'irradiation a été faite sous 3 Mrad pendant 17 heures. Le produit issu de l'irradiation a été ensuite placé sous vide pendant une nuit à 130°C pour évacuer l'anhydride maléïque non-greffé. La teneur en anhydride maléïque greffé (9000 ppm) a été déterminée à l'aide de le spectroscopie infrarouge.
**LOTADER® 8840 :** copolymère de l'éthylène et du méthacrylate de glycidyle de la société ATOFINA et de MVI (Melt Volume Index ou indice de fluidité en volume à l'état fondu) 5 cm³/10 min (mesuré à 190°C sous 2,16 kg). Il contient 92% d'éthylène et 8% de méthacrylate de glycidyle en poids.
**PEHD FINATHENE® 3802 :** désigne un polyéthylène haute-densité de la société ATOFINA de melt-flow 0,2 g/10 min (mesuré à 190°C sous 2,16 kg). Sa densité est de 0,938.
**FORTRON® 0214:** désigne un polysulfure de phénylène de la société TICONA de melt-flow 57 (mesuré à 315°C sous 5 kg). Sa densité est de 1,35.

### Exemple 1 (suivant l'invention) :

On réalise sur une extrudeuse de type Mc Neil une structure tricouche, constituée de l'intérieur vers l'extérieur, d'une couche de 300 µm d'épaisseur d'un mélange de 30% de PVDF-1 et de 70% de Kynar® 720, coextrudée sur une couche de 100 µm de mélange obtenu par mélange à sec au pied de la machine de 50% en masse de LOTADER® 8840 et de 50% de PEHD FINATHENE® 3802. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 240°C pour chacune des extrudeuses utilisées, ainsi que pour la tête de coextrusion. La filière est maintenue à une température de 250°C. Le pelage à t+24 heures (c'est à dire 24h après l'extrusion) donne une force d'adhésion de 60 N/cm. La structure obtenue ne présente aucun défaut de coextrusion, la surface interne est parfaitement lisse, sans aucune vague de coextrusion.

### Exemple 2 (comparatif) :

On réalise sur une extrudeuse de type Mc Neil une structure tricouche, constituée de l'intérieur vers l'extérieur, d'une couche de 300 µm d'épaisseur d'un mélange de 30% de PVDF-1 et de 70% de Kynar® 720, coextrudée sur une couche de 100 µm de LOTADER® 8840. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 240°C pour chacune des extrudeuses utilisées, ainsi que pour la tête de coextrusion. La filière est maintenue à une température de 250°C. Le pelage à t+24 heures donne une force d'adhésion de 50 N/cm. La surface interne présente de légères vagues de coextrusion.

### Exemple 3 (comparatif) :

On réalise sur une extrudeuse de type Mc Neil une structure tricouche, constituée de l'intérieur vers l'extérieur, d'une couche de FORTRON® 0214 de 300 µm d'épaisseur, coextrudée sur une couche de 100 µm de LOTADER® 8840. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 315°C pour l'extrudeuse de PPS et 240°C pour les autres materiaux ainsi que pour la tête de coextrusion. La filière est maintenue à une température de 315°C. Le pelage à t+24 heures donne une force d'adhésion de 40N/cm. La surface interne présente de légères vagues de coextrusion.

### Exemple 4 (suivant l'invention) :

On réalise sur une extrudeuse de type Mc Neil une structure tricouche, constituée de l'intérieur vers l'extérieur, d'une couche de FORTRON® 0214 de 300 µm d'épaisseur, coextrudée sur une couche de 100 µm de mélange obtenu par mélange à sec au pied de la machine de 50% en masse de LOTADER® 8840 et de 50% de PEHD FINATHENE® 3802. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 315°C pour l'extrudeuse de PPS et 240°C pour les autres materiaux ainsi que pour la tête de coextrusion. La filière est maintenue à une température de 315°C. Le pelage à t+24 heures donne une force d'adhésion de 45 N/cm. La structure obtenue présente quelques gels mais aucun défaut de coextrusion, la surface interne est parfaitement lisse, sans aucune vague.

### Exemple 5 (suivant l'invention) :

On réalise sur une extrudeuse de type Mc Neil une structure tricouche, constituée de l'intérieur vers l'extérieur, d'une couche de 300 µm d'épaisseur d'un mélange de 30% de PVDF-1 et de 70% de Kynar® 720, coextrudée sur une couche de 100 µm de mélange obtenu par mélange à sec au pied de la machine de 30% en masse de LOTADER® 8840 et de 70% de PEHD FINATHENE® 3802. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 240°C pour chacune des extrudeuses utilisées, ainsi que pour la tête de coextrusion. La filière est maintenue à une température de 250°C. Le pelage à t+24 heures donne une force d'adhésion de 65 N/cm. La structure obtenue ne présente aucun défaut de coextrusion, la surface interne est parfaitement lisse, sans aucune vague de coextrusion.

### Exemple 6 (suivant l'invention) :

On réalise sur une extrudeuse de type Mc Neil une structure tricouche, constituée de l'intérieur vers l'extérieur, d'une couche de 300 µm d'épaisseur d'un mélange de 30% de PVDF-1 et de 70% de Kynar® 720, coextrudée sur une couche de 100 µm de mélange obtenu par mélange à sec au pied de la machine de 15% en masse de LOTADER® 8840 et de 85% de PEHD FINATHENE® 3802. Cette couche est elle-même coextrudée sur une couche de 2,6 mm de FINATHENE® 3802. La structure finale présente un diamètre extérieur de 32 mm et une épaisseur de 3 mm. Cette coextrusion est réalisée à une température de 240°C pour chacune des extrudeuses utilisées, ainsi que pour la tête de coextrusion. La filière est maintenue à une température de 250°C. Le pelage à t+24 heures donne une force d'adhésion de 70 N/cm. La structure obtenue ne présente aucun défaut de coextrusion, la surface interne est parfaitement lisse, sans aucune vague de coextrusion.

## Revendications

1. Structure comprenant successivement :
une couche de polymère barrière,
une couche de liant comprenant, le total étant 100% :
• 1 à 80% d'au moins un polyéthylène portant des fonctions époxy,
• 99 à 20% d'au moins un polymère visqueux compatible avec le polyéthylène portant des fonctions époxy,
une couche de polyéthylène,
les couches adhérant dans leur zone de contact respective.

2. **Structure comprenant** successivement :
une couche de polymère barrière,
une couche de liant comprenant, le total étant 100% :
• 1 à 80% d'au moins un polyéthylène portant des fonctions époxy,
• 99 à 20% d'au moins un polymère visqueux compatible avec le polyéthylène portant des fonctions époxy,
une couche de polyéthylène,
une couche de liant comprenant, le total étant 100% :
• 1 à 80% d'au moins un polyéthylène portant des fonctions époxy,
• 99 à 20% d'au moins un polymère visqueux compatible avec le polyéthylène portant des fonctions époxy,
une couche de polymère barrière,
les couches adhérant dans leur zone de contact respective.

3. Structure selon la revendication 1 ou 2 dans laquelle le polymère visqueux compatible avec le polyéthylène portant des fonctions époxy est choisi parmi les copolymères blocs SBS hydrogénés, les EPR, les EPDM et le polyéthylène.

4. Structure selon la revendication 3 dans laquelle le polymère visqueux compatible avec le polyéthylène portant des fonctions époxy est le polyéthylène.

5. Structure comprenant successivement :
Soit :
une couche de polymère barrière,
une couche de liant comprenant, le total étant 100% :
• 1 à 80% d'au moins un polyéthylène portant des fonctions époxy,
• 99 à 20% d'au moins un polyéthylène visqueux compatible avec le polyéthylène portant des fonctions époxy,
les couches adhérant dans leur zone de contact respective.
soit :
une couche de polymère barrière,
une couche de liant comprenant, le total étant 100% :
• 1 à 80% d'au moins un polyéthylène portant des fonctions époxy,
• 99 à 20% d'au moins un polyéthylène visqueux compatible avec le polyéthylène portant des fonctions époxy,
une couche de polymère barrière,
les couches adhérant dans leur zone de contact respective.

6. Structure selon l'une quelconque des revendications précédentes dans laquelle le polymère visqueux compatible avec le polyéthylène portant des fonctions époxy est le PEHD.

7. Structure selon l'une quelconque des revendications précédentes dans laquelle le MFI du polymère visqueux compatible avec le polyéthylène portant des fonctions époxy est compris entre 0,1 et 1 g/10 min à 190°C et sous 2,16 kg.

8. Structure selon la revendication 7 dans laquelle le MFI du polymère visqueux compatible avec le polyéthylène portant des fonctions époxy est compris entre 0,15 et 0,5 g/10 min sous 190°C et 2,16 kg.

9. Structure selon l'une quelconque des revendications précédentes dans laquelle, dans la couche de liant, le polyéthylène portant des fonctions époxy est un copolymère de l'éthylène et d'un époxyde insaturé.

10. Structure selon l'une quelconque des revendications précédentes dans laquelle les proportions du liant sont:
• 10 à 50% du polyéthylène portant des fonctions époxy,
• 90 à 50% du polymère visqueux compatible avec le polyéthylène portant des fonctions époxy.

11. Structure selon la revendication 10 dans laquelle les proportions du liant sont :
• 10 à 40% du polyéthylène portant des fonctions époxy,
• 90 à 60% du polymère visqueux compatible avec le polyéthylène portant des fonctions époxy.

12. Structure selon l'une quelconque des revendications précédentes dans laquelle le MFI du liant est compris entre 0,15 et 1 g/10 minutes (mesuré à 190°C sous 2,16 kg).

13. Structure selon l'une quelconque des revendications précédentes dans laquelle la couche de polymère barrière comprend, le total étant 100%, de 1 à 100% de polymère barrière fonctionnalisé et 99 à 0% de polymère barrière.

14. Structure selon la revendication 13 dans laquelle la couche de polymère barrière comprend, le total étant 100%, de 1 à 40% de polymère barrière fonctionnalisé et 99 à 60% de polymère barrière.

15. Structure selon la revendication 14 dans laquelle la couche de polymère barrière comprend, le total étant 100%, de 15 à 40% de polymère barrière fonctionnalisé et 85 à 60% de polymère barrière.

16. Structure selon l'une quelconque des revendications précédentes dans laquelle la couche de polymère barrière est constituée de deux couches, l'une comprenant un mélange, le total étant 100%, de 1 à 100% de polymère barrière fonctionnalisé et 99 à 0% de polymère barrière, cette couche étant disposée contre la couche de liant,
l'autre constituée du polymère barrière.

17. Structure selon la revendication 16 dans laquelle la couche de polymère barrière est constituée de deux couches, l'une comprenant un mélange, le total étant 100%, de 1 à 40% de polymère barrière fonctionnalisé et 99 à 60% de polymère barrière, cette couche étant disposée contre la couche de liant,
l'autre constituée du polymère barrière.

18. Structure selon la revendication 17 dans laquelle la couche de polymère barrière est constituée de deux couches, l'une comprenant un mélange, le total étant 100%, de 15 à 40% de polymère barrière fonctionnalisé et 85 à 60% de polymère barrière, cette couche étant disposée contre la couche de liant,
l'autre constituée du polymère barrière.

19. Structure selon l'une quelconque des revendications précédentes dans laquelle le polymère barrière est le PVDF.

20. Dispositifs de stockage ou de transfert de fluides constitués de la structure selon l'une quelconque des revendications précédentes dans lesquels la couche de polymère barrière est au contact du fluide stocké ou transporté.
